# EUROPEAN PATENT SPECIFICATION

(11) **EP 0 937 631 B1**
(45) Date of publication and mention of the grant of the patent: **15.12.2004**
(21) Application number: 99301234.3
(22) Date of filing: 19.02.1999
(51) Int. Cl.: B62D 25/20, B62D 29/00, B62D 21/15

(54) **Automobile body frame**
Kraftfahrzeugrahmen
Châssis de véhicule

(30) Priority: 19.02.1998 JP 3720098; 04.11.1998 JP 31285598
(43) Date of publication of application: 25.08.1999
(73) Proprietor: HONDA GIKEN KOGYO KABUSHIKI KAISHA, Minato-ku, Tokyo (JP)
(72) Inventor: Iwatsuki, Shuuichiro, Wako-shi, Saitama (JP)
(74) Representative: Leale, Robin George

(56) References cited:
- DE-C- 4 333 557
- JP-A- 4 081 372
- US-A- 4 557 519
- US-A- 5 435 110

## Description

The present invention relates to an automobile body frame.

An automobile body frame of a space frame type comprising welded hollow members is generally such that front side frames extend on the respective inner sides of the front wheels, side sills extend on the respective sides of a passenger space floor, and the rear ends of the front side frames and the front ends of the side sills are all connected to a dash board lower cross member. In such an arrangement, the coupling locations at which the front side frames and the side sills are connected to the dash board lower cross member are respectively set in offset positions in the width direction of the automobile. As a result, if the automobile undergoes a head-on collision, input positions where the crashing load applied from the front side frame and the counterforce load applied from the side sill are applied to the dash board lower cross member, are shifted relative to each other. Accordingly, the coupling regions where the front side frames and the dash board lower cross member are connected together tend to bend easily toward the interior of the passenger space.

JP 4081372 A (on which the pre-characterising part of claim 1 is based) discloses a lightweight car body structure having high structural rigidity.

It is undesirable for any deformation of the automobile body to intrude into the passenger space, and the rigidity of the passenger space floor has therefore been increased by enlarging the sectional areas of the dash board lower cross member and the side sills. However, if the sizes of these parts are increased, comfort in the passenger space and ease of boarding and alighting are reduced.

Further, there is another problem in the case of a side impact. In order to protect a passenger from a side impact, a center pillar must be restrained from intruding into the passenger space. Consequently, the bending rigidity of the coupling between the center pillar and a side sill should be increased. Hence, a relatively greater sectional area is normally given to the side sill, which again may result in reduced ease of boarding and alighting.

An automobile body frame according to the present invention comprises an automobile body frame comprising:
a front side frame;
a rear cross member; and
a beam, formed by extrusion molding from a light metal material, coupling a rear end of said front side frame to a side end of said rear cross member, characterised in that said beam is hollow and said body frame further comprises an outrigger formed by die casting, wherein a rear end of said hollow beam and the side end of said rear cross member are connected to said outrigger.

In consequence, load applied to the front side frame as a result of a head-on collision is received by the hollow beam extending longitudinally of the passenger space, so that the aforementioned intrusion of the dash board lower cross member into the passenger space is avoided. Desired rigidity can be obtained without increasing the thickness of the passenger space floor, by forming the hollow beam as a quadrilateral having a cross sectional shape whose width is smaller than its height and joining the facing inner surfaces of upper and lower walls of the hollow beam by a rib. Moreover, the rigidity of the joint between the hollow beam and the rear cross member can be increased further by connecting the rear end of the hollow beam and the side end of the rear cross member to an outrigger.

An automobile body frame according to a preferred embodiment of the invention further comprises a side sill, a sheet rail bracket formed by die casting which connects a center pillar coupling region of said side sill to said hollow beam. With this arrangement, the sectional area of the side sill may be reduced, since a load applied to the center pillar is received by both the side sill and the hollow beam. Moreover, no special highly rigid member is required as a coupling member since the side sill and the hollow beam are connected together by means of the sheet rail bracket.

Two embodiments of the invention will now be described by way of example and with reference to the accompanying drawings, in which:-
Fig. 1 is a perspective view of an automobile body frame according to a first embodiment of the present invention;
Fig. 2 is a perspective view of part of the frame, showing the connection of each member to an outrigger;
Fig. 3 is a sectional view of a floor beam;
Fig. 4 is a perspective view of an outrigger;
Fig. 5 shows the connection of a rear trailing arm to the outrigger;
Fig. 6 is a perspective view of an automobile body frame according to a second embodiment of the present invention;
Fig. 7 is a sectional view taken along line II-II in Fig. 6; and
Fig. 8 is an enlarged perspective view of the arrangement of a sheet rail bracket in the embodiment of Fig. 6.

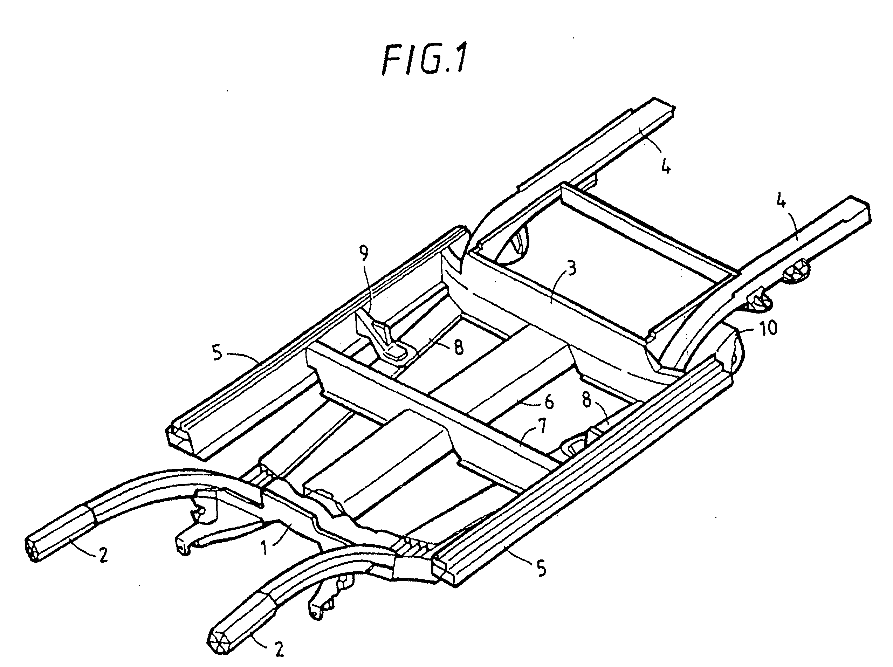

Referring to Fig. 1, the frame is formed by welding together various members made of aluminum alloy, and comprises a pair of front side frames 2, a pair of rear side frames 4, a pair of side sills 5, a floor tunnel 6, a middle cross member 7, a pair of floor beams 8 (which are hollow beams), sheet rail brackets 9, and an outrigger 10.

The front side frames 2 extend forward, and rear ends thereof are joined to a dash board lower cross member 1. The rear side frames 4 extend rearward, and front ends thereof are joined to a rear cross member 3. The side sills 5 extend in the longitudinal direction so as to couple the respective side ends of the dash board lower cross member 1 and the rear cross members 3. The floor tunnel 6 extends in the longitudinal direction and couples the central portions of the dash board lower cross member 1 and the rear cross member 3. The middle cross member 7 couples the side sills 5 in the longitudinally intermediate region of a passenger space. Each of the floor beams 8 couples the joint between the front side frame 2 and the dash board lower cross member 1 to the side end of the rear cross member 3. The floor beams 8 are disposed so that the distance between them gradually increases in the rearward direction. The sheet rail brackets 9 are located to the rear of the middle cross member 7 and couple the side sills 5 to the respective hollow beams 8. The sheet rail brackets 9 support the rear ends of sheet rails (not shown). The outrigger 10 is provided at each coupling location between the rear cross member 3, the rear side frame 4, the side sill 5 and the floor beam 8.

Each of these members is formed of a hollow material by extrusion molding except that the dash board lower cross member 1, the sheet rail brackets 9 and the outriggers 10 are formed by die casting.

Although not illustrated in Fig. 1, flooring which is formed by press-molding an aluminum alloy sheet is provided in a passenger space and a trunk space.

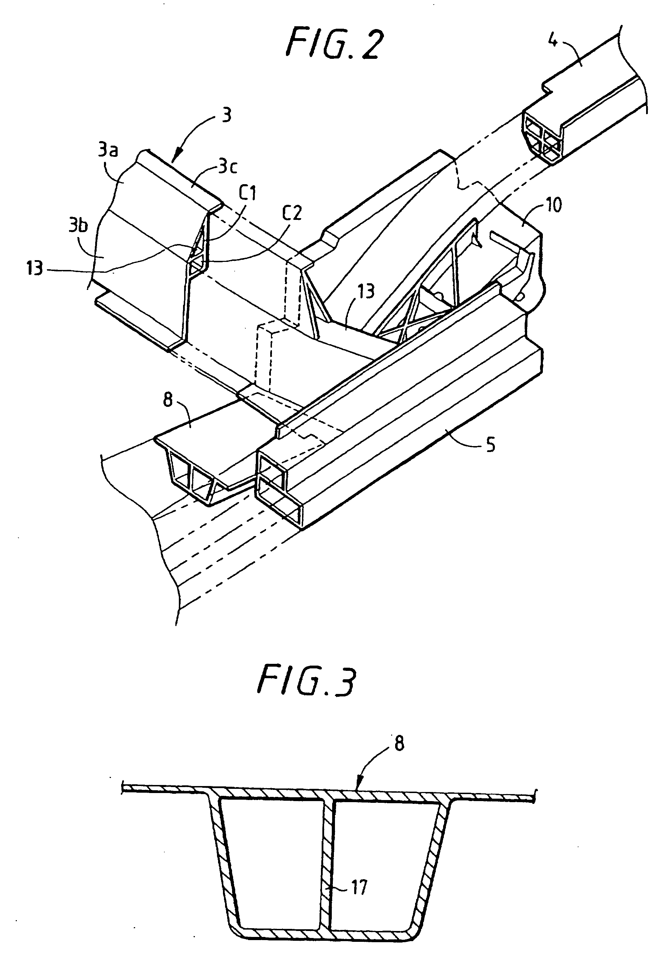

The rear cross member 3 connected to the rear end of the floor tunnel 6 is formed by extrusion molding from aluminum alloy. As shown in Fig. 2, the cross sectional shape of the rear cross member 3 includes a first portion 3a, a second portion 3b, and an eaves-like portion 3c. The first portion 3a is formed by two vertically stacked closed sectional portions C1, C2. The second portion 3b extends downward from the front wall of the first portion 3a with its lower edge portion extending forward like an apron. The eaves-like portion 3c extends rearward from the top of the first portion 3a.

Both end regions of the rear cross member 3 are curved rearwardly, and a portion above an intermediate partition wall 13 between the two closed sectional portions C1, C2 of the first portion 3a is cut off in each end region of the cross member. The ends of the lower closed sectional portion C2 and the second portion 3b are welded by fillet welding to the inner sides of the side sills 5. Thus the side sills 5 are coupled together via the rear cross member 3, whose hollow closed sectional portion C2 is continuous over its whole length, in the width direction of the automobile.

As shown in Fig. 3, the cross sectional shape of the floor beam 8 is an inverted trapezoid whose height is smaller than its width and whose lower side is narrower than its upper side. The facing inner surfaces of the upper and lower walls are joined by a vertical rib 17, whereby sufficient buckling strength is achieved without increasing the sectional area.

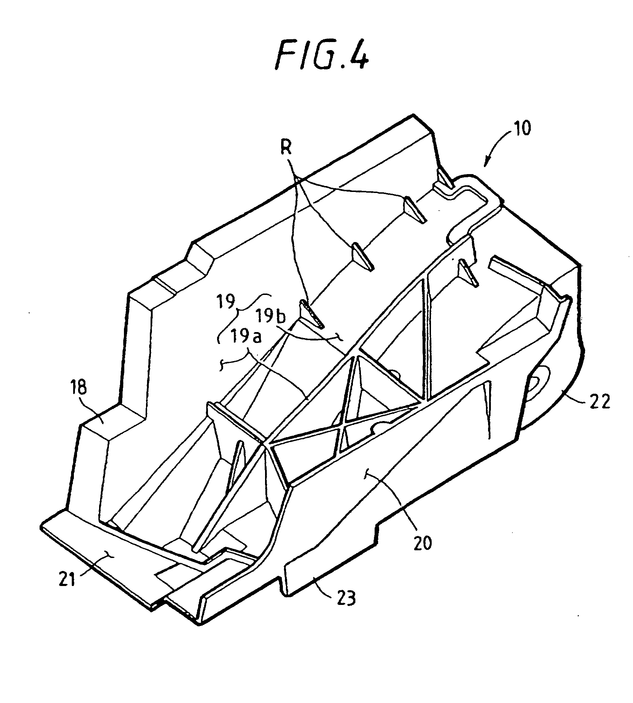

The outrigger 10 provided at each coupling location between the rear cross member 3, the rear side frame 4, the side sill 5 and the floor beam 8, is formed by die casting as previously noted. As shown in Fig. 4, the outrigger 10 comprises the following portions formed integrally with each other: a step-form rear cross member connecting portion 18, a rear side frame connecting portion 19, a side sill connecting portion 20, a floor beam connecting portion 21, an arm bracket portion 22, and a side jack-up point 23. Further, the outrigger 10 is reinforced with ribs R.

The rear cross member connecting portion 18 has a stepped shape so as to engage with the back and bottom of the first portion 3a in the end region of the rear cross member 3, and the back of the second portion 3b thereof. The rear side frame connecting portion 19 includes side walls 19a reinforced with triangular ribs R, to be joined to the sides of the front end region of the rear side frame 4. The portion 19 further includes a bottom wall 19b in the form of a gentle arc, to be joined to the bottom of the front end region of the rear side frame 4. The side sill connecting portion 20 is joined to the inside of the rear end region of the side sill 5. The floor beam connecting portion 21 is joined to the upper surface of the rear end region of the floor beam 8. A rear trailing arm is pivotally connected to the arm bracket portion 22.

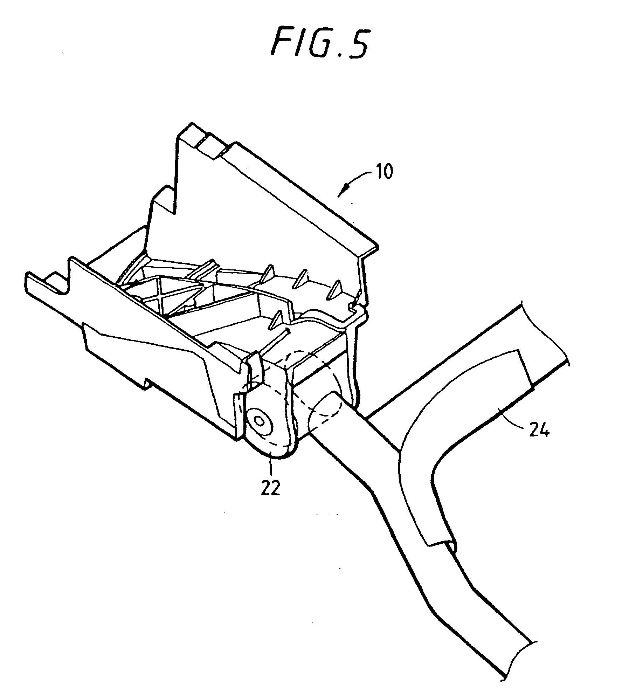

A shown in Fig. 2, the end regions of the extruded members, including the rear cross member 3, the rear side frame 4, the side sill 5 and the floor beam 8, are welded to the outrigger 10, and as shown in Fig. 5 the rear trailing arm 24 is pivotally connected to the arm bracket portion 22.

According to the above embodiment, a hollow beam 8 formed by extrusion molding from a light metal material linearly couples the rear end of each front side frame 2 to the end of the rear cross member 3. It thereby becomes possible to increase the bending rigidity of the passenger space flooring without enlarging the sectional area of the side sill 5. This achieves the effect of restraining deformation of the automobile body caused by a collision load from extending into the passenger space, but without incurring a reduction of comfort in the passenger space, and maintaining ease of boarding and lighting. Further, if the sectional shape of the hollow beam 8 is as shown in Fig. 3, desired rigidity can be obtained without increasing the thickness of the passenger space flooring. In addition, the rigidity of the joint between the hollow beam 8 and the rear cross member 3 is increased by connecting the rear end of the hollow beam and the end of the rear cross member to the outrigger 10.

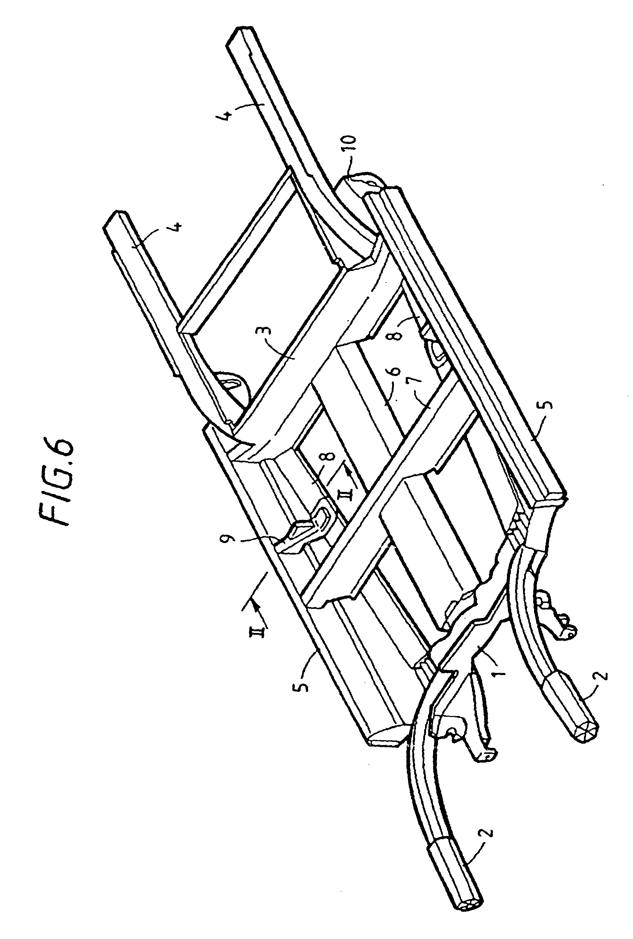

Figs. 6 to 8 show a second embodiment of the invention. Parts which are the same as in the first embodiment are designated by the same numbers and explanation thereof will be omitted.

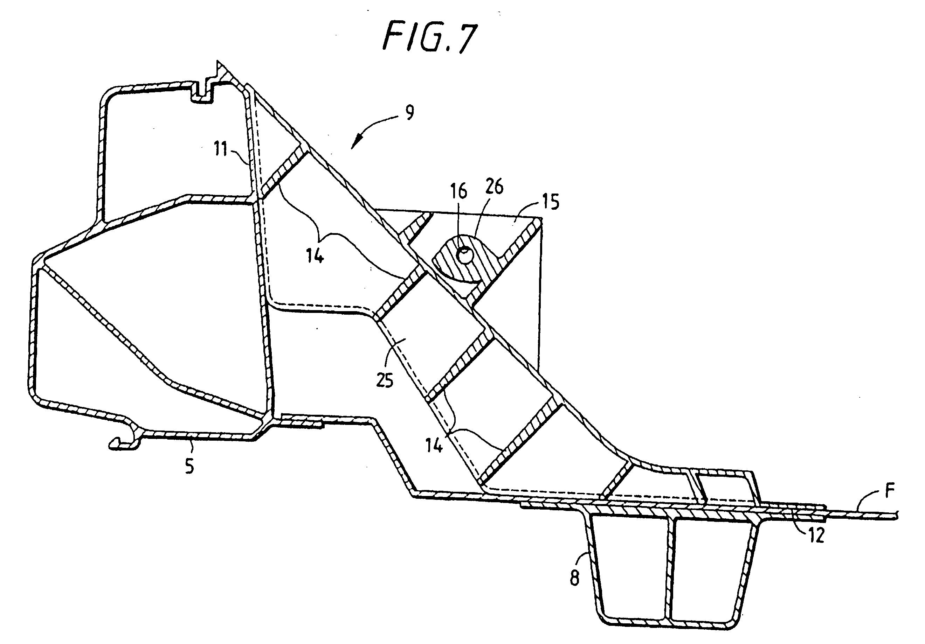

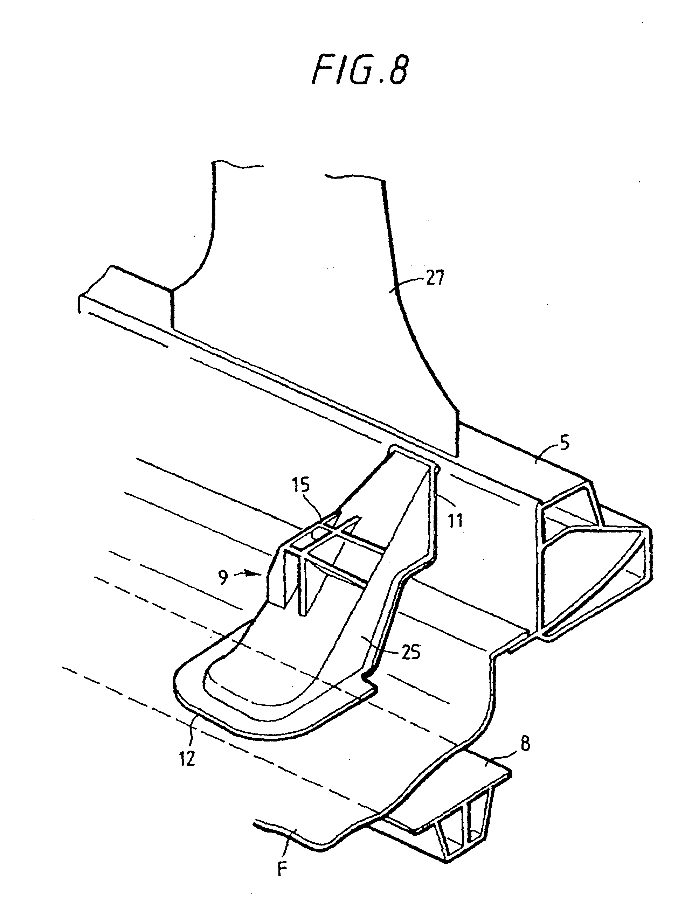

In this embodiment the sheet rail bracket 9, as shown in Figs. 7 and 8, has a vertical face 11 which is joined by welding, for example, to the inner side of the side sill 5 in the region of the center pillar coupling portion of the side sill and the floor beam 8, a horizontal face 12 joined by welding, for example, to the surface of the flooring F extending over the floor beam 8, and a gusset portion 25 which connects the aforesaid two faces, all of these component elements of the sheet rail bracket being integrally formed by die casting from aluminum alloy.

The gusset portion 25 is in the form of a box whose interior is spanned by a plurality of ribs 14 so as to obtain greater rigidity, and also has a mount portion 15 on its sloping surface. The mount portion 15 is used for mounting the rear end of the sheet rail and is provided with a boss 26 having a screw hole 16 to receive a bolt for fixing the sheet rail.

Thus, two members, the side sill 5 and the floor beam 8, extending in the longitudinal direction are laterally coupled together via a highly rigid member, the sheet rail bracket 9, in proximity to the center pillar 27, whereby the side sill 5 and the floor beam 8 both receive load applied to the center pillar 27. Consequently, the bending rigidity of the connection between the center pillar 27 and the side sill 5 can be increased without the reduction in ease of boarding and alighting which would result from using a side sill having a large sectional area, and without using a special highly rigid member as a reinforcement, which could bring about a substantial increase in production cost.

Thus, according to the above embodiment, the bending rigidity of the connection between the center pillar and the side sill can be increased without incurring a substantial increase in the size of the side sill and thereby in production cost, with the result that deformation of the center pillar due to a side impact has a reduced effect in the passenger space.

It will thus be seen that the present invention, at least in its preferred forms, provides an automobile body frame so designed so as to increase rigidity in the longitudinal direction of flooring without reducing comfort in the passenger space or ease of boarding and alighting, and so as also to increase the bending rigidity of the coupling between a center pillar and a side sill without incurring an increase in the size of the side sill.

## Claims

1. An automobile body frame comprising:
a front side frame (2);
a rear cross member (3); and
a hollow beam (8), formed by extrusion molding from a light metal material, coupling a rear end of said front side frame to a side end of said rear cross member, **characterised in that** said body frame comprises an outrigger (10) formed by die casting, wherein a rear end of said hollow beam (8) and the side end of said rear cross member (3) are connected to said outrigger.

2. An automobile body frame according to claim 1, wherein said hollow beam (8) has a quadrilateral cross section of which the width is smaller than the height.

3. An automobile body frame according to claim 2, wherein said hollow beam (8) has a rib (17) joining an upper wall and a lower wall thereof.

4. An automobile body frame according to any preceding claim, wherein a pair of said hollow beams (8) are provided, the lateral spacing between which gradually increases in the rearward direction.

5. An automobile body frame as claimed in any preceding claim, further comprising a side sill (5), a sheet rail bracket (9) formed by die casting which connects a center pillar (27) coupling region of said side sill to said hollow beam.

## Patentansprüche

1. Kraftfahrzeug-Karosserierahmen, umfassend:
einen vorderen Seitenrahmen (2);
ein hinteres Querbauteil (3); und
einen hohlen Balken (8), welcher durch Extrusionsformen aus einem Leichtmetallmaterial gebildet ist und ein hinteres Ende des vorderen Seitenrahmens an ein seitliches Ende des hinteren Querbauteils koppelt,
**dadurch gekennzeichnet, dass** der Karosserierahmen einen Ausleger (10) umfasst, der durch Spritzgießen gebildet ist, wobei ein hinteres Ende des hohlen Balkens (8) und das seitliche Ende des hinteren Querbauteils (3) mit dem Ausleger verbunden sind.

2. Kraftfahrzeug-Karosserierahmen nach Anspruch 1, wobei der hohle Balken (8) einen viereckigen Querschnitt aufweist, bei dem die Breite kleiner ist als die Höhe.

3. Kraftfahrzeug-Karosserierahmen nach Anspruch 2, wobei der hohle Balken (8) eine Rippe (17) aufweist, welche eine obere Wand und eine untere Wand desselben verbindet.

4. Kraftfahrzeug-Karosserierahmen nach einem der voranstehenden Ansprüche, wobei ein Paar der hohlen Balken (8) vorgesehen ist und wobei sich der seitliche Abstand zwischen denselben in Richtung nach hinten allmählich vergrößert.

5. Kraftfahrzeug-Karosserierahmen nach einem der voranstehenden Ansprüche, ferner umfassend einen Außenlängsträger (5) und eine durch Spritzgießen gebildete Blechschienenhalterung (9), welche einen Mittelpfeiler (27)-Verbindungsbereich des Außenlängsträgers mit dem hohlen Balken verbindet.

## Revendications

1. Châssis d'automobile, comprenant :
un cadre latéral antérieur (2) ;
une traverse postérieure (3) ; et
une poutre creuse (8), formée par moulage-extrusion à partir d'un matériau en métal léger, couplant une extrémité arrière dudit cadre latéral antérieur à une extrémité latérale de ladite traverse postérieure,
**caractérisé en ce que** ledit châssis comprend une patte transversale (10) formée par coulée en matrice, et dans lequel une extrémité postérieure de ladite poutre creuse (8) et l'extrémité latérale de ladite traverse postérieure (3) sont connectées à ladite patte transversale.

2. Châssis d'automobile selon la revendication 1, dans lequel ladite poutre creuse (8) présente une section transversale en forme de quadrilatère dont la largeur est inférieure à la hauteur.

3. Châssis d'automobile selon la revendication 2, dans lequel ladite poutre creuse (3) possède une nervure (17) qui rejoint sa paroi supérieure et sa paroi inférieure.

4. Châssis d'automobile selon l'une quelconque des revendications précédentes, dans lequel une paire desdites poutres creuses (8) sont prévues, l'espacement latéral entre lesdites poutres augmentant graduellement dans la direction vers l'arrière.

5. Châssis d'automobile selon l'une quelconque des revendications précédentes, comprenant en outre un seuil latéral (5), une platine (9) pour un rail en tôle, formée par coulée en matrice, qui connecte un pilier central (27) qui accouple une région dudit seuil latéral à ladite poutre creuse.
